# EUROPÄISCHE PATENTANMELDUNG

(11) **EP 2 075 419 A2**
(43) Veröffentlichungstag der Anmeldung: **01.07.2009**
(21) Anmeldenummer: 08021199.8
(22) Anmeldetag: 05.12.2008
(51) Int. Cl.: F01D 25/18, F02C 7/06

(54) **Gasturbinenölversorgungssystem sowie Verfahren zum Betrieb einer Gasturbinen-Lager-Ölversorgung**

(30) Priorität: 07.12.2007 DE 102007058954
(71) Anmelder: Rolls-Royce Deutschland Ltd & Co KG, 15827 Blankenfelde-Mahlow (DE)
(72) Erfinder: Pisseloup, Arnoud, 10405 Berlin (DE)
(74) Vertreter: Weber, Joachim

(57) **Zusammenfassung**

Gasturbinenölversorgungssystem und Verfahren zum Betrieb einer Lager-Öl-Versorgung einer Gasturbine, mit einem Öltank (1) und einer von dem Öltank (1) abzweigenden Versorgungsleitung (2), wobei in der Versorgungsleitung (2) eine elektrische Ölpumpe (3) angeordnet ist und wobei stromab der Ölpumpe (3) ein erstes steuerbares Abzweigelement (4) angeordnet ist, durch welches der Ölstrom durch eine Rücklaufleitung (5) in den Öltank (1) rückführbar ist.

## Beschreibung

Die Erfindung bezieht sich auf ein Gasturbinenölversorgungssystem und ein Verfahren zum Betrieb einer Gasturbinen-Lager-Ölversorgung.

Aus dem Stand der Technik sind Ölversorgungssysteme bekannt, bei welchen Lageröl für den Turbinenrotor mittels einer mechanischen Pumpe aus einem Öltank zu den Lagern gepumpt wird. Die mechanische Pumpe ist üblicherweise an dem Getriebe angeflanscht und wird über eine der Wellen der Gasturbine, meist die Hochgeschwindigkeitswelle, angetrieben.

Weiterhin ist es bekannt, die Zuführelemente und die Rückführelemente in der gleichen Pumpeneinheit vorzusehen. Dies bedeutet, dass beide Pumpenelemente für die Ölversorgung und die Rückführung von Öl durch die gleiche Antriebswelle angetrieben und zum gleichen Zeitpunkt betätigt werden.

Bei kalten Betriebsbedingungen, insbesondere wenn sich die Öltemperatur unterhalb eines vorgegebenen Sollwertes befindet, beispielsweise bei -54°C, ist es nicht empfehlenswert, die Gasturbine zu starten. Bei Öltemperaturen oberhalb dieses Temperatur-Sollwerts, jedoch unterhalb eines zweiten Grenzwertes (beispielsweise -40°C) wird empfohlen, vor Beschleunigung auf die höchste Leistung die Gasturbine für zumindest fünf Minuten im Leerlauf laufen zu lassen. Während dieser Zeit soll sichergestellt sein, dass eine ausreichende Öltemperatur eintritt, die bei einem positiven Wert, beispielsweise bei +10°C liegt.

Derartige extreme Bedingungen mit kaltem Öl treten beispielsweise am Boden bei kalten Wetterbedingungen auf, wenn die Gasturbine über Nacht oder über einen längeren Zeitraum gestanden ist oder durch den Wind angetrieben wurde.

Die aus dem Stand der Technik bekannten Lösungen erfordern vor dem Start der Gasturbine eine Ölheizung, entweder über ein internes Heizaggregat in dem Öltank oder unter Verwendung externer Vorrichtungen, welche Wärme in den Öltank transportieren. Diese Lösungen sind schwer einrichtbar und erfordern am Flughafen externe Einrichtungen, die nicht immer zur Verfügung stehen können und welche zusätzlich durch das Flugzeug transportiert werden müssen, wenn dieses an abgelegenen Plätzen, beispielsweise für militärische Einsätze, landen muss.

Weiterhin erfordern die Betriebsvorschriften, dass ein Pilot die Flughöhe erheblich reduziert, um einen Wiederstart einer Gasturbine zu erlauben, welche über einen längeren Zeitraum nur durch den Fahrtwind gedreht wurde, so dass die Öltemperatur unter einen Grenzwert abgesunken ist, der einen Gasturbinenstart erlaubt.

Weiterhin bestimmen die Betriebsvorschriften, dass auch bei einer Öltemperatur über -40°C es nicht empfehlenswert ist, die Gasturbine über die Leerlaufdrehzahl zu beschleunigen, bevor die Öltemperatur einen weiteren Grenzwert erreicht, der durch die Betriebsvorschriften vorgegeben ist und vom Typ der Gasturbine abhängen kann.

Als nachteilig erweist es sich somit, dass die vorbekannten Maßnahmen zur Erwärmung des Öls beim Start der Gasturbine oder bei einer Beschleunigung auf maximale Leistung eine Veränderung im Flugzustand, beispielsweise eine Reduzierung der Höhe, erfordern oder voraussetzen, dass die Gasturbine über einen vorgegebenen Zeitpunkt mit einer festgesetzten maximalen Leistung betrieben wird. Dies führt insbesondere bei militärischen Anwendungen, bei welchen ein schneller Start wichtig ist, zu erheblichen Nachteilen.

Eine Veränderung der Flugbedingungen führt für den Piloten, sowohl bei militärischen als auch bei zivilen Einsätzen, zu einer starken Beeinträchtigung, da die Flughöhe begrenzt ist. Derartige Beschränkungen sind beispielsweise bei hohem Terrain (Bergen) oder hinsichtlich der Luftraumstruktur nicht möglich.

Der Erfindung liegt die Aufgabe zugrunde, ein Gasturbinenölversorgungssystem sowie ein Verfahren zum Betrieb einer Lager-Öl-Versorgung einer Gasturbine zu schaffen, welche unter Vermeidung der Nachteile des Standes der Technik eine effektive Erwärmung des Öls ermöglicht.

Erfindungsgemäß wird die Aufgabe durch die Merkmalskombinationen der unabhängigen Ansprüche gelöst, die Unteransprüche zeigen weitere vorteilhafte Ausgestaltungen der Erfindung.

Erfindungsgemäß ist somit vorgesehen, dass eine elektrische Ölpumpe verwendet wird. Diese elektrische Ölpumpe ist unabhängig von der Drehzahl der Welle der Gasturbine und ermöglicht ein Umpumpen des Öls unabhängig von der Drehzahl der Gasturbine. Somit ist es möglich, die elektrische Ölpumpe unabhängig von der Gasturbine in Betrieb zu setzen. Die elektrische Ölpumpe kann somit auch dann in Betrieb genommen werden, wenn die Gasturbine stillsteht.

Erfindungsgemäß wird die elektrische Ölpumpe verwendet, um das Öl, welches über die Versorgungsleitung aus dem Öltank abgepumpt wird, zu rezirkulieren und in den Öltank zuzupumpen. Hierdurch ist eine Beschädigung der Ölpumpe bei sehr zähem Öl nicht zu befürchten, da kein weiterer Widerstand entgegengesetzt wird. Insbesondere wird nicht, wie aus dem Stand der Technik bekannt, das kalte Öl zunächst durch die Lagerkammern gepumpt.

Durch die erfindungsgemäße Ausgestaltung ist es somit möglich, das Öl vorzuwärmen, um einen schnellen Start der Gasturbine zu ermöglichen und somit die Zeit bis zum Start des Flugzeugs zu verkürzen.

Es wird erfindungsgemäß somit lediglich elektrische Energie benötigt, um die elektrische Ölpumpe anzutreiben. Diese elektrische Energie kann durch eine externe Stromversorgung oder durch ein einfaches Stromaggregat bereitgestellt werden. Durch die Abwärme der elektrischen Ölpumpe wird das Öl zusätzlich erwärmt, zusätzlich zu der Erwärmung durch die Druckbeaufschlagung durch die elektrische Ölpumpe selbst.

Im Folgenden wird die Erfindung anhand eines Ausführungsbeispiels in Verbindung mit der Zeichnung beschrieben. Dabei zeigt:
- Fig. 1: eine schematische Darstellung eines Teils des erfindungsgemäßen Ölkreislaufs im kalten Betriebszustand,
- Fig. 2: die Darstellung analog Fig. 1 im Betriebszustand mit ausreichender Öltemperatur, und
- Fig. 3: eine schematische Darstellung eines Ölkreislaufs gemäß dem Stand der Technik.

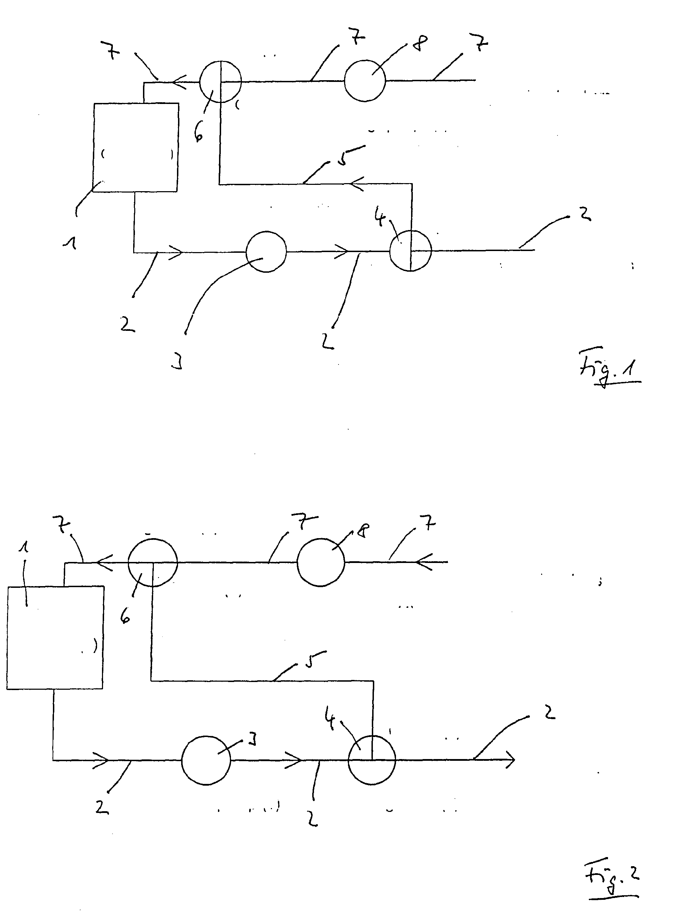

Die Fig. 1 und 2 zeigen einen Öltank 1, von welchem eine Versorgungsleitung 2 abzweigt, um Öl zu nicht dargestellten Lagerkammern zu pumpen. In der Ölversorgungsleitung 2 ist eine elektrische Ölpumpe 3 angeordnet.

Stromab der elektrischen Ölpumpe 3 ist ein erstes Abzweigelement 4 angeordnet (Mehrwegeventil), welches extern steuerbar ist. Von dem ersten Abzweigelement 4 zweigt eine Rücklaufleitung 5 ab, welche zu einem zweiten Abzweigelement 6 (Mehrwegeventil) führt, welches in einer Rückführleitung von den Lagerkammern zu dem Öltank 1 angeordnet ist. Das Bezugszeichen 8 zeigt eine Rückführpumpe 8, welche elektrisch oder mechanisch betätigt werden kann.

Die Fig. 1 zeigt einen Zustand, bei welchem sich das Öl unterhalb eines Sollwertes befindet. Dabei schaltet das erste Abzweigelement 4 den von der elektrischen Ölpumpe gepumpten Ölstrom so, dass dieser durch die Rücklaufleitung 5 in den Öltank 6 zurückgepumpt wird, wobei das zweite Abzweigelement 6 sich ebenfalls in der Rezirkulationsposition befindet.

Bei dem in Fig. 1 gezeigten Zustand handelt es sich somit um einen Zustand vor dem Start der Gasturbine. Dabei wird kein Öl zu den Antriebs- und Lagerelementen zugeführt. Vielmehr wird das Öl lediglich umgepumpt, um dieses zu erwärmen.

Bei sehr kalten Betriebszuständen kann die Trägheit der Ölmasse in dem Tank einen schnellen Anstieg der Temperatur und eine Wärmeverteilung durch die elektrische Ölpumpe verhindern. Bei derartigen kalten Extrem-Bedingungen kann es günstig sein, ein zusätzliches elektrisches Heizaggregat in die elektrische Ölpumpe 3 zu integrieren oder dieser zuzuordnen, welches Wärme durch die elektrische Ölpumpe zuführt und diese verteilt. Dies führt zu einer Verkürzung der zum Erwärmen des Öls zu einer Solltemperatur benötigten Zeit.

Bei Erreichen eines Sollwertes schalten die Abzweigelemente 4 und 6 in die in Fig. 2 gezeigte Betriebsstellung. In dieser wird kein Öl durch die Rücklaufleitung 5 rezirkuliert, vielmehr wird der gesamte Ölstrom durch die Versorgungsleitung 2 den Lagerkammern oder sonstigen Verbrauchern zugeleitet und durch die Rückführleitung 7 (unter Zuhilfenahme der Rückführpumpe 8) zurückgeführt. Hierbei wird durch das große, in dem Öltank 1 bevorratete erwärmte Ölvolumen die Aufwärmzeit des restlichen Öls in dem Ölsystem und in den Lagerkammern sowie den weiteren Verbrauchern deutlich reduziert.

Als vorteilhaft erweist sich somit eine erhebliche Verkürzung der Aufwärmphase der gesamten Gasturbine.

Weiterhin ist es vorteilhaft, dass keine entsprechenden Warnleuchten im Cockpit aktiviert werden müssen, welche beim Stand der Technik den Piloten daran hindern, bei kaltem Öl oder hohem Druckverlust über einen Ölfilter die Gasturbine zu starten oder deren Drehzahl zu erhöhen.

Durch den elektrischen Antrieb ist es möglich, auf bodengebundene Einrichtungen zu verzichten.

Ein weiterer Vorteil besteht darin, dass die erfindungsgemäße Lösung gänzlich unabhängig von der Drehzahl der Gasturbinenwellen ist und somit auch betätigt werden kann, wenn die Gasturbine steht und kein Ölfluß zu den Lagern und weiteren Verbrauchern erforderlich ist.

Durch die erfindungsgemäß vorgesehene Möglichkeit der Vorheizung des Öls ist es beim Start der Gasturbine möglich, innerhalb kürzester Zeit Öl mit ausreichender Betriebstemperatur den Lagern und den weiteren Verbrauchern zuzuführen. Dabei ergeben sich insbesondere keine Druckverluste, so wie dies aus dem Stand der Technik bekannt ist.

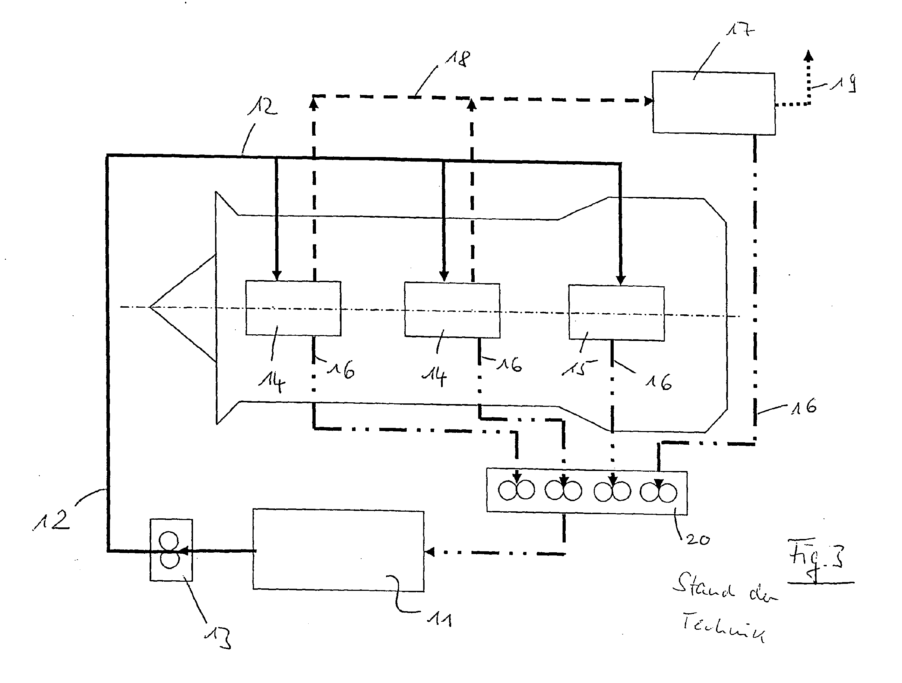

Die Fig. 3 zeigt einen Ölkreislauf gemäß dem Stand der Technik. Der Umriss einer Gasturbine ist schematisch dargestellt. Diese umfasst belüftete Lagerkammern 14 sowie eine unbelüftete Lagerkammer 15. Die Lagerkammern 14 und 15 werden über eine Ölversorgungsleitung 12, in welcher eine Ölpumpe 13 vorgesehen ist, mit Öl aus einem Öltank 11 versorgt. Über Rückführleitungen 16 wird das Öl durch eine Rücklaufpumpe 20 in den Tank 11 zurückgefördert. Weiterhin sind an den Lagerkammern 14 und 15 Entlüftungsleitungen 18 angeschlossen, die ein Öl-Luftgemisch einem Entlüfter 17 (Breather) zuleiten. Von diesem aus wird das abgeschiedene Öl über eine Rückführleitung 16 zur Rückführpumpe 20 geleitet, während Luft über eine Abluftleitung 19 abgeführt wird.

### Bezugszeichenliste

- 1: Öltank
- 2: Versorgungsleitung
- 3: elektrische Ölpumpe
- 4: erstes Abzweigelement (Mehrwegeventil)
- 5: Rücklaufleitung
- 6: zweites Abzweigelement (Mehrwegeventil)
- 7: Rückführleitung
- 8: Rückführpumpe

- 11: Öltank
- 12: Versorgungsleitung
- 13: Ölpumpe
- 14: belüftete Lagerkammer
- 15: unbelüftete Lagerkammer
- 16: Rückführleitung
- 17: Entlüfter/Breather
- 18: Entlüftungsleitung
- 19: Abluftleitung
- 20: Rückführpumpe

## Patentansprüche

1. Gasturbinenölversorgungssystem mit einem Öltank (1) und einer von dem Öltank (1) abzweigenden Versorgungsleitung (2), wobei in der Versorgungsleitung (2) eine elektrische Ölpumpe (3) angeordnet ist und wobei stromab der Ölpumpe (3) ein erstes steuerbares Abzweigelement (4) angeordnet ist, durch welches der Ölstrom durch eine Rücklaufleitung (5) in den Öltank (1) rückführbar ist.

2. System nach Anspruch 1, **dadurch gekennzeichnet, dass** die Rücklaufleitung (5) über ein zweites steuerbares Abzweigelement (6) in eine Rückführleitung (7) mündet.

3. System nach Anspruch 1 oder 2, **dadurch gekennzeichnet, dass** die elektrische Ölpumpe mit einem zusätzlichen Heizelement versehen ist.

4. Verfahren zum Betrieb einer Lager-Öl-Versorgung einer Gasturbine, wobei in einer von einem Öltank (1) abzweigenden Versorgungsleitung (2) eine elektrische Ölpumpe (3) angeordnet ist, welcher stromab ein steuerbares Abzweigelement (4) zugeordnet ist, von welchem Öl zu den Lagern oder durch eine Rücklaufleitung (5) in den Öltank (1) pumpbar ist, wobei die Öltemperatur im Öltank (1) ermittelt und mit einem Sollwert verglichen wird, wobei bei Unterschreiten des Sollwerts die elektrische Ölpumpe (3) eingeschaltet und das Abzweigelement (4) zur Rezirkulation des Öls durch die Rücklaufleitung (5) geschaltet wird.

5. Verfahren nach Anspruch 4, **dadurch gekennzeichnet, dass** bei Erreichen und/oder Überschreiten des Sollwerts das Abzweigelement (4) zur Weiterleitung des Öls zu Lagerkammern und/oder weiteren Verbrauchern geschaltet wird.

6. Verfahren nach Anspruch 4 oder 5, **dadurch gekennzeichnet, dass** ein zweites Abzweigelement (6), durch welches die Rücklaufleitung (5) in eine Rückführleitung (7) mündet, zusammen mit dem ersten steuerbaren Abzweigelement (4) geschaltet wird.
